# EUROPÄISCHE PATENTSCHRIFT

(11) **EP 3 453 581 B1**
(45) Veröffentlichungstag und Bekanntmachung des Hinweises auf die Patenterteilung: **11.03.2020**
(21) Anmeldenummer: 18188271.3
(22) Anmeldetag: 09.08.2018
(51) Int. Cl.: B60T 17/04, F16K 17/04

(54) **ÜBERSTRÖMVENTIL UND DRUCKLUFTEINRICHTUNG FÜR KRAFTFAHRZEUGE**
OVERFLOW VALVE AND COMPRESSED AIR DEVICE FOR MOTOR VEHICLES
SOUPAPE DE DÉCHARGE À PRESSION ET DISPOSITIF À AIR COMPRIMÉ POUR VÉHICULES AUTOMOBILES

(30) Priorität: 12.09.2017 DE 102017008556
(43) Veröffentlichungstag der Anmeldung: 13.03.2019
(73) Patentinhaber: WABCO GmbH, 30453 Hannover (DE)
(72) Erfinder: HERMSDORF, Uwe, 39130 Magdeburg (DE); PETERS, Andreas, 31683 Obernkirchen (DE); SIEKER, Armin, 33611 Bielefeld (DE); STEPHAN, Arne, 30177 Hannover (DE)
(74) Vertreter: Koschnitzki, Thomas

(56) Entgegenhaltungen:
- EP-A2- 2 388 499
- CH-A- 518 205
- CH-A- 558 733
- US-A- 4 424 738

## Beschreibung

Die Erfindung betrifft ein Überströmventil für Drucklufteinrichtungen, welches einen Druckeingang sowie einen Druckausgang für Druckluft aufweist, und mit einem Schaltkolben, der in einer Schließstellung des Überströmventils dichtend auf einem Ventilsitz aufsitzt und der gegen eine einstellbare Rückstellkraft einer Druckfeder unter der Wirkung des am Druckeingang des Überströmventils anstehenden Drucks der Druckluft von dem Ventilsitz abhebbar ist, und bei dem zusätzlich eine zweite Druckfeder vorhanden ist, welche in Schließrichtung des Überströmventils auf den Schaltkolben mit einer vorgebbaren Rückstellkraft einwirkt.

Aus der CH 558 733 A ist ein Druckregler für Druckluftbremsanlagen mit einem Schaltventil und einem Leerlaufventil zur Steuerung der von einem Kompressor kommenden Druckluft bekannt. Das Schaltventil ist als Überströmventil ausgebildet und im oberen Abschnitt des mittleren Teils eines dreiteiligen Reglergehäuses angeordnet. Das Überströmventil weist dabei einen gehäusefesten Ventilsitz und einen einer einstellbaren Federkraft unterliegenden Ventilschließkörper auf. Die unmittelbar auf den Ventilschließkörper wirkende Druckfeder ist vollständig im mittleren Teil des Reglergehäuses angeordnet, während eine hinsichtlich deren Federkraft einstellbare zweite Druckfeder in einem oberen, außenluftführenden Gehäuseteil platziert ist.

Ein weiteres Überströmventil ist aus der EP 2 388 499 A2 bekannt. Es weist einen Einlass sowie einen Auslass für Druckluft auf, und ein Ventilglied sitzt in der Schließstellung des Überströmventils dichtend auf einem Ventilsitz. Das Ventilglied ist gegen die Rückstellkraft eines längsbeweglichen Ventilkolbens, der von einer Ventilfeder beaufschlagt ist, unter der Wirkung des Drucks auf eine dem Einlass zugeordnete erste Wirkfläche und des Drucks des auf eine dem Auslass zugeordnete zweite Wirkfläche von dem Ventilsitz abhebbar. Um ein präzises Öffnen oder Schließen des Überströmventils bei Erreichen vorgebbarer, auch dicht beieinander liegender beziehungsweise gleich großer Druckwerte zu erreichen, ist auf der dem Ventilkolben zugewandten Seite des Ventilglieds ein mit dem Auslass kommunizierender Druckausgleichraum vorgesehen, in dem der auslassseitige Luftdruck über eine Ausgleichswirkfläche am Ventilkolben unmittelbar auf den Ventilkolben wirkt.

Dieses Überströmventil hat sich im Betrieb an sich bewährt, allerdings ist das Verhältnis von druckbelasteten Flächen sowie realisierbarer Nennweite relativ ungünstig und bedingt in Abhängigkeit des Schaltpunktes des Überströmventils entsprechend hohe Federkräfte. Außerdem weist dieses Überströmventil eine vergleichsweise große Schalthysterese sowie ein ungünstiges Bauvolumen auf.

Vor diesem Hintergrund lag der Erfindung die Aufgabe zugrunde, ein Überströmventil vorzuschlagen, dessen Öffnungscharakteristik nicht vom ausgesteuerten Druck beeinflusst ist, kleinere Federkräfte als bisher bekannt benötigt und eine geringere Hysterese sowie ein besseres, gut einstellbares Schaltverhalten bei kleineren Federkräften aufweist.

Die Lösung dieser Aufgabe wird mit einem Überströmventil erreicht, welches die Merkmale des Anspruchs 1 aufweist. Vorteilhafte Weiterbildungen sind in den abhängigen Ansprüchen genannt.

Demnach betrifft die Erfindung ein Überströmventil für Drucklufteinrichtungen, welches einen Druckeingang sowie einen Druckausgang für Druckluft aufweist, und mit einem Schaltkolben, der in einer Schließstellung des Überströmventils dichtend auf einem Ventilsitz aufsitzt und der gegen eine einstellbare Rückstellkraft einer Druckfeder unter der Wirkung des am Druckeingang des Überströmventils anstehenden Drucks der Druckluft von dem Ventilsitz abhebbar ist, und bei dem zusätzlich eine zweite Druckfeder vorhanden ist, welche in Schließrichtung des Überströmventils auf den Schaltkolben mit einer vorgebbaren Rückstellkraft einwirkt.

Bei diesem Überströmventil ist zur Lösung der gestellten Aufgabe vorgesehen, dass sich die zweite Druckfeder in einem Gehäuseoberteil des Überströmventils etwa in Höhe des Ventilsitzes sowie an dem Schaltkolben, axial beabstandet vom Ventilsitz, axial nahe zu einem Gehäuseunterteil abstützt.

Durch diesen Aufbau des Überströmventils ist dessen Öffnungscharakteristik nicht vom ausgesteuerten Druck beeinflusst, es sind kleinere Federkräfte als bisher bekannt notwendig, und es ist eine geringere Hysterese sowie ein besseres, gut einstellbares Schaltverhalten bei kleineren Federkräften zu verzeichnen.

Dadurch, dass sich die zweite Druckfeder in einem Gehäuseoberteil des Überströmventils etwa in Höhe des Ventilsitzes sowie an dem Schaltkolben, axial beabstandet vom Ventilsitz, axial nahe zu einem Gehäuseunterteil abstützt, wird die Kippneigung des Schaltkolbens gegenüber dem Ventilsitz vermindert und eine gleichmäßige Dichtlinienpressung erreicht.

Die zweite Druckfeder wirkt dabei in Schließrichtung des Überströmventils bevorzugt mit einer unveränderlichen Rückstellkraft auf den Schaltkolben ein.

Durch das beanspruchte Überströmventil lässt sich ein besseres, gut einstellbares Schaltverhalten erreichen. Hierzu ist auch bevorzugt vorgesehen, dass die erste Druckfeder zur Feineinstellung der auf den Schaltkolben wirkenden, einstellbaren Rückstellkraft dient, und dass die Rückstellkraft der auf den Schaltkolben wirkenden zweiten Druckfeder größer ist als die einstellbare Rückstellkraft der ersten Druckfeder sowie zur Einstellung des generellen Schaltniveaus des Überströmventils dient.

Gemäß einer anderen Weiterbildung dieses Überströmventils kann vorgesehen sein, dass die erste Druckfeder in einem zum Schaltkolben koaxial angeordneten Führungsrohr aufgenommen ist, und dass deren Rückstellkraft mittels einer blockierbaren Einstellschraube einstellbar ist. Hierbei ist bevorzugt vorgesehen, dass die erste Druckfeder derartig angeordnet ist, dass sie dem Atmosphärendruck ausgesetzt ist.

Vorzugsweise kann außerdem vorgesehen sein, dass sich die erste Druckfeder mit ihrem einen Ende an der Einstellschraube im Führungsrohr sowie mit ihrem anderen Ende an einer auf einen axialen Gewindefortsatz in axialer Verlängerung des Schaltkolbens geschraubten, zylindrischen Stützmutter abstützt, wobei diese zylindrische Stützmutter zur oberen Führung des Schaltkolbens in einer die zylindrische Stützmutter mit engem Gleitspiel umgebenden Bohrung im Führungsrohr axial beabstandet vom Ventilsitz angeordnet ist, und wobei im Bereich des axial anderen Endes des Schaltkolbens eine Zylinderfläche desselben zu seiner unteren Führung in einer geometrisch komplementären Zylinderfläche einer Bohrung im Gehäuseoberteil dient.

Diese axial weit auseinander liegenden Führungen des Schaltkolbens in Verbindung mit den ebenfalls axial weit beabstandeten Abstützungen der zweiten Druckfeder, deren eine einen maximalen Abstand vom Ventilsitz aufweist, lassen sich sowohl Ungenauigkeiten der Betätigung aufgrund von Reibung am Schaltkolben sowie Undichtigkeiten am Ventilsitz durch geringfügiges Kippen des Schaltkolbens vermeiden, beziehungsweise zumindest vermindern.

Weiter kann vorgesehen sein, dass zwischen dem Schaltkolben und dem Führungsrohr eine axial bewegliche Membran abgedichtet angeordnet ist, deren abdichtende Wirkfläche gleichgroß ist wie die Wirkfläche des Ventilsitzes, so dass der Druck in einem zum Druckausgang führenden Raum keine Rückwirkung auf die Position des Schaltkolbens ausübt.

Außerdem ist bevorzugt vorgesehen, dass das Einlassrohr, der Schaltkolben, die zweite Druckfeder, das Führungsrohr und die erste Druckfeder koaxial zueinander angeordnet sind.

Mit dem erfindungsgemäßen Überströmventil lässt sich bei einem konkreten Ausführungsbeispiel bei einem Öffnungsdruck von 0,6 MPA ein Schließdruck von 0,57 MPA erzeugen, demnach also eine Hysterese von 0,03 MPA bei einer Federkraft von 80 N erreichen, während das Überströmventil gemäß dem eingangs erwähnten Stand der Technik bei einem Öffnungsdruck von 0,6 MPA einen Schließdruck von 0,5 MPA aufweist mit einer Hysterese von 0,1 MPA bei einer Federkraft von 320 N.

Die vorstehend definierte Aufgabe wird des Weiteren gelöst durch eine Drucklufteinrichtung für Kraftfahrzeuge mit einer Druckluftleitung, an die ein Druckluftspeicher zur Versorgung von Verbrauchereinheiten anschließbar ist, welche dadurch gekennzeichnet ist, dass in wenigstens einer zu den Verbrauchereinheiten führenden Druckluftleitung ein Überströmventil angeordnet ist, welches die Merkmale von wenigsten einem der Patentansprüche aufweist.

Zum besseren Verständnis ist der Beschreibung eine Zeichnung beigefügt, die ein Überströmventil mit den Merkmalen der Erfindung in einer Querschnittsdarstellung zeigt.

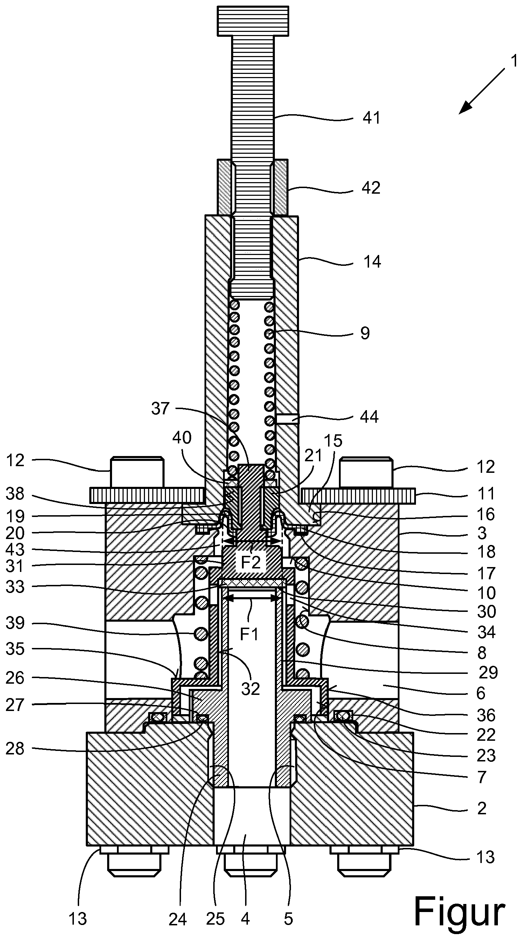

Die einzige Figur zeigt demnach ein Überströmventil 1, das ein Gehäuseunterteil 2 und ein Gehäuseoberteil 3 aufweist, wobei das Gehäuseunterteil 2 einen Druckeingang 4 in Form einer zylindrischen Bohrung mit einem Innengewinde 5 umfasst. Ein oder mehrere Druckausgänge 6 verlaufen rechtwinklig zum Druckeingang 4 und sind im Gehäuseoberteil 3 ausgebildet. Dieser eine Druckausgang 6 oder mehrere Druckausgänge haben eine hohlzylindrische Geometrie und gehen radial von einer axialen Bohrung 7 im Gehäuseoberteil 3 aus. Oberhalb des Druckausgangs 6 geht die axiale Bohrung 7 in eine Bohrung 8 mit kleinerem Durchmesser über, in der eine zweite Druckfeder 39 angeordnet ist.

Diese zweite Druckfeder 39 stützt sich einerseits an einem druckausgangfernen Endabsatz 10 der Bohrung 8 sowie mit ihrem entgegengesetzten Ende an einer Radialfläche 35 eines in der Bohrung 7 angeordneten Schaltkolbens 31 ab.

Das Gehäuseunterteil 2 ist mit dem Gehäuseoberteil 3 durch Spannschrauben 12 und Muttern 13 zusammengespannt, wobei die Spannschrauben 12 über eine Druckplatte 11 auf das Gehäuseoberteil 3 einwirken.

Ein zylindrisches Führungsrohr 14 ist mittels seines zylindrischen Flansches 15 in einer geometrisch dazu komplementären Vertiefung 16 im Gehäuseoberteil 3 mittels der Druckplatte 11 eingespannt. Eine zur Unterseite dieses Flansches 15 benachbarte Ringnut 17 im Gehäuseoberteil 3 dient zur dichtenden Einspannung eines radial äußeren Ringwulstes 18 an einer ringförmigen, elastischen Membran 19, deren radial innerer Ringwulst 20 an einer zylindrischen Stützmutter 21 dichtend anliegt.

Eine Abdichtung zwischen dem Gehäuseunterteil 2 und dem Gehäuseoberteil 3 erfolgt durch einen in einer Ringnut 22 im Gehäuseoberteil 3 angeordneten O-Ring 23.

Ein Einlassrohr 24 ist mit einem Außengewinde 25 in das Innengewinde 5 des Druckeingangs 4 im Gehäuseunterteil 2 eingeschraubt und mittels eines in einer Ringnut 27 in einem Flansch 26 am Einlassrohr 24 angeordneten O-Rings 28 gegenüber dem Gehäuseunterteil 2 abgedichtet.

Ein hohlzylindrischer axialer Fortsatz 29 am Einlassrohr 24 endet in einem ringförmigen Ventilsitz 30. Der Schaltkolben 31 ist mit seiner zylindrischen Bohrung 32 koaxial über den zylindrischen Fortsatz 29 aufgeschoben und liegt mit einer am Ende seiner zylindrischen Bohrung 32 befestigten Dichtscheibe 33 auf dem Ventilsitz 30 auf, wenn das Überströmventil 1 geschlossen ist. Nahe dem Ventilsitz 30 sind Radialbohrungen 34 im Schaltkolben 31 ausgebildet, die bei vom Ventilsitz 30 abgehobenem Schaltkolben 31 eine Druckluftkommunikation zwischen dem Druckeingang 4 und dem Druckausgang 6 ermöglichen.

Die erwähnte zweite Druckfeder 39 stützt sich auf der ventilsitzfernen Radialfläche 35 des Schaltkolbens 31 ab, welche in eine Zylinderfläche 36 größeren Durchmessers übergeht, die zur axialen unteren Führung des Schaltkolbens 31 in der Bohrung 7 im unteren Abschnitt des Gehäuseoberteils 3 dient. Am entgegengesetzten axialen Ende des Schaltkolbens 31 ist ein Gewindefortsatz 37 ausgebildet, auf dem die Stützmutter 21 aufgeschraubt ist, welche zur oberen Führung des Schaltkolbens 31 in einer zylindrischen Bohrung 38 im Führungsrohr 8 dient.

Eine erste Druckfeder 9 stützt sich einerseits über einen Druckring 40 auf der Stützmutter 21 und andererseits an einer Einstellschraube 41 ab, um eine Feineinstellung der kombinierten Federkraft der zweiten Druckfeder 39 und der ersten Druckfeder 9 vornehmen zu können. Die Einstellschraube 41 ist hierzu in das freie Ende des Führungsrohres 14 teilweise eingeschraubt. Nach der Einstellung der Federkraft durch die Einstellschraube 41 lässt sich diese mittels einer Kontermutter 42 fixieren.

Das Führungsrohr 14 ist mit einer Entlüftungsbohrung 44 versehen, um einen Druckanstieg im Innenraum des Führungsrohrs 14 durch Leckagen im Bereich der Membran 19 zu vermeiden. Die Wirkfläche F1 des Ventilsitzes 30 und die Wirkfläche F2 der Membran 19 sind gleich groß gewählt, so dass ein Druckanstieg in einem nahe zu der Membran 19 ausgebildeten und zum Druckausgang 6 führenden Raum 43 bei vom Ventilsitz 30 abgehobenen Schaltkolben 31 keinen Einfluss auf die Schaltcharakteristik des Überströmventils 1 hat.

Durch die zweite Druckfeder 39, deren Federkraft konstruktiv festgelegt ist, ist ein generelles Schaltniveau bestimmt, während mittels der ersten Druckfeder 9 die Feineinstellung der Öffnungscharakteristik des Überströmventils 1 eingestellt wird.

Wird das Überströmventil 1 über den Druckeingang 4 mit Druckluft, beispielsweise von einem nicht dargestellten Druckspeicher beaufschlagt, hebt der Schaltkolben 31 vom Ventilsitz 30 ab und die Druckluft strömt durch die Radialbohrungen 34 im Schaltkolben 31 über einen zum Druckausgang 6 führenden Raum 43 zu einer nicht dargestellten Verbrauchereinheit, beispielsweise zu einer nicht dargestellten Luftfederanlage oder Druckluftbremsanlage eines Kraftfahrzeugs. Sobald zwischen dem Druckeingang 4 und dem Druckausgang 6 ein Druckgleichgewicht herrscht oder am Druckeingang 4 der Druck abgesenkt wird, sinkt der Schaltkolben 31 unter der Wirkung der beiden Federn 9, 39 wieder auf den Ventilsitz 30 zurück und das Überströmventil 1 schließt sich.

Dadurch, dass zwischen dem Schaltkolben 31 und dem Führungsrohr 14 die axial bewegliche Membran 19 abdichtend angeordnet ist, deren abdichtende Wirkfläche F2 gleichgroß ist wie die Wirkfläche F1 des Ventilsitzes 30, übt der Druck in dem mit dem Druckausgang 6 verbundenen Raum 43 keine Rückwirkung auf die Position des Schaltkolbens 31 aus.

Alle in der vorstehenden Figurenbeschreibung, in den Ansprüchen und in der Beschreibungseinleitung genannten Merkmale sind sowohl einzeln als auch in beliebiger Kombination miteinander einsetzbar. Die Erfindung ist somit nicht auf die beschriebenen und beanspruchten Merkmalskombinationen beschränkt, vielmehr sind alle Merkmalskombinationen als offenbart zu betrachten.

## Patentansprüche

1. Überströmventil (1) für Drucklufteinrichtungen, welches einen Druckeingang (4) sowie einen Druckausgang (6) für Druckluft aufweist, und mit einem Schaltkolben (31), der in einer Schließstellung des Überströmventils (1) dichtend auf einem Ventilsitz (30) aufsitzt und der gegen eine einstellbare Rückstellkraft einer Druckfeder (9) unter der Wirkung des am Druckeingang (4) des Überströmventils (1) anstehenden Drucks der Druckluft von dem Ventilsitz (30) abhebbar ist, und bei dem zusätzlich eine zweite Druckfeder (39) vorhanden ist, welche in Schließrichtung des Überströmventils (1) auf den Schaltkolben (31) mit einer vorgebbaren Rückstellkraft einwirkt, **dadurch gekennzeichnet, dass** sich die zweite Druckfeder (39) in einem Gehäuseoberteil (3) des Überströmventils (1) etwa in Höhe des Ventilsitzes (30) sowie an dem Schaltkolben (31), axial beabstandet vom Ventilsitz (30), axial nahe zu einem Gehäuseunterteil (2) abstützt.

2. Überströmventil nach Anspruch 1, **dadurch gekennzeichnet, dass** die zweite Druckfeder (39) in Schließrichtung des Überströmventils (1) auf den Schaltkolben (31) mit einer unveränderlichen Rückstellkraft einwirkt.

3. Überströmventil nach Anspruch 1 oder 2, **dadurch gekennzeichnet, dass** die erste Druckfeder (9) zur Feineinstellung der auf den Schaltkolben (31) wirkenden, einstellbaren Rückstellkraft dient, und dass die Rückstellkraft der auf den Schaltkolben (31) wirkenden zweiten Druckfeder (39) größer ist als die einstellbare Rückstellkraft der ersten Druckfeder (9) sowie zur Einstellung des generellen Schaltniveaus des Überströmventils (1) dient.

4. Überströmventil nach einem der Ansprüche 1 bis 3, **dadurch gekennzeichnet, dass** die erste Druckfeder (9) in einem zum Schaltkolben (31) koaxial angeordneten Führungsrohr (14) aufgenommen ist, und dass deren Rückstellkraft mittels einer blockierbaren Einstellschraube (41) einstellbar ist.

5. Überströmventil nach Anspruch 4, **dadurch gekennzeichnet, dass** die erste Druckfeder (9) derartig angeordnet ist, dass sie dem Atmosphärendruck ausgesetzt ist.

6. Überströmventil nach einem der Ansprüche 1 bis 5, **dadurch gekennzeichnet, dass** die zweite Druckfeder (39) derartig angeordnet ist, dass sie dem Druck am Druckausgang (6) des Überströmventils ausgesetzt ist.

7. Überströmventil nach einem der Ansprüche 1 bis 6, **dadurch gekennzeichnet, dass** sich die erste Druckfeder (9) mit ihrem einen Ende an der Einstellschraube (41) im Führungsrohr (14) sowie mit ihrem anderen Ende an einer auf einen axialen Gewindefortsatz (37) in axialer Verlängerung des Schaltkolbens (31) geschraubten, zylindrischen Stützmutter (21) abstützt, wobei die zylindrische Stützmutter (21) zur oberen Führung des Schaltkolbens (31) in einer die zylindrische Stützmutter (21) mit engem Gleitspiel umgebenden Bohrung (38) im Führungsrohr (14) axial beabstandet vom Ventilsitz (30) angeordnet ist, und wobei im Bereich des axial anderen Endes des Schaltkolbens (31) eine Zylinderfläche (36) desselben zu seiner unteren Führung in einer geometrisch komplementären Zylinderfläche einer Bohrung (7) im Gehäuseoberteil (3) dient.

8. Überströmventil nach einem der Ansprüche 1 bis 7, **dadurch gekennzeichnet, dass** zwischen dem Schaltkolben (31) und dem Führungsrohr (14) eine axial bewegliche Membran (19) abgedichtet angeordnet ist, deren abdichtende Wirkfläche (F2) gleichgroß ist wie die Wirkfläche (F1) des Ventilsitzes (30), so dass der Druck in einem zum Druckausgang (6) führenden Raum (43) keine Rückwirkung auf die Position des Schaltkolbens (31) ausübt.

9. Überströmventil nach einem der Ansprüche 1 bis 8, **dadurch gekennzeichnet, dass** das Einlassrohr (24), der Schaltkolben (31), die zweite Druckfeder (39), das Führungsrohr (14) und die erste Druckfeder (9) koaxial zueinander angeordnet sind.

10. Drucklufteinrichtung für Kraftfahrzeuge mit einer Druckluftleitung, an die ein Druckluftspeicher zur Versorgung von Verbrauchereinheiten anschließbar ist, **dadurch gekennzeichnet, dass** in wenigstens einer zu den Verbrauchereinheiten führenden Druckluftleitung ein Überströmventil (1) angeordnet ist, welches die Merkmale von wenigsten einem der vorherigen Ansprüche aufweist.

## Claims

1. Overflow valve (1) for compressed-air devices, which valve has a pressure inlet (4) and a pressure outlet (6) for compressed air, and having a switching piston (31) which is seated sealingly on a valve seat (30) when the overflow valve (1) is in a closed position and which can be lifted from the valve seat (30), counter to a settable resetting force of a pressure spring (9), under the action of the pressure of the compressed air prevailing at the pressure inlet (4) of the overflow valve (1), and in which valve there is additionally provided a second pressure spring (39) which acts on the switching piston (31) in a closing direction of the overflow valve (1) with a predefinable resetting force, **characterized in that** the second pressure spring (39) is supported in a housing upper part (3) of the overflow valve (1) approximately at the level of the valve seat (30) and on the switching piston (31), axially at a distance from the valve seat (30), axially close to a housing lower part (2).

2. Overflow valve according to Claim 1, **characterized in that** the second pressure spring (39) acts on the switching piston (31) in the closing direction of the overflow valve (1) with an invariant resetting force.

3. Overflow valve according to Claim 1 or 2, **characterized in that** the first pressure spring (9) serves for the fine adjustment of the settable resetting force acting on the switching piston (31), and **in that** the resetting force of the second pressure spring (39) acting on the switching piston (31) is greater than the settable resetting force of the first pressure spring (9) and serves for setting the general switching level of the overflow valve (1).

4. Overflow valve according to any of Claims 1 to 3, **characterized in that** the first pressure spring (9) is accommodated in a guide tube (14) which is arranged coaxially with respect to the switching piston (31), and **in that** the resetting force of said first pressure spring is settable by means of a blockable setting screw (41).

5. Overflow valve according to Claim 4, **characterized in that** the first pressure spring (9) is arranged so as to be exposed to atmospheric pressure.

6. Overflow valve according to any of Claims 1 to 5, **characterized in that** the second pressure spring (39) is arranged so as to be exposed to the pressure at the pressure outlet (6) of the overflow valve.

7. Overflow valve according to any of Claims 1 to 6, **characterized in that** the first pressure spring (9) is supported with one end thereof on the setting screw (41) in the guide tube (14) and with the other end thereof on a cylindrical supporting nut (21) which is screwed onto an axial threaded projection (37) as an axial elongation of the switching piston (31), wherein, for the upper guidance of the switching piston (31), the cylindrical supporting nut (21) is arranged in a bore (38), which surrounds the cylindrical supporting nut (21) with a close sliding fit, in the guide tube (14) so as to be axially spaced apart from the valve seat (30), and wherein, in the region of the axially other end of the switching piston (31), a cylindrical surface (36) thereof serves for the lower guidance of said switching piston in a geometrically complementary cylindrical surface of a bore (7) in the housing upper part (3) .

8. Overflow valve according to any of Claims 1 to 7, **characterized in that** an axially movable membrane (19) is arranged in sealed fashion between the switching piston (31) and the guide tube (14), the sealing effective area (F2) of which membrane is the same size as the effective area (F1) of the valve seat (30), such that the pressure in a space (43) leading to the pressure outlet (6) has no retroactive effect on the position of the switching piston (31).

9. Overflow valve according to any of Claims 1 to 8, **characterized in that** the inlet tube (24), the switching piston (31), the second pressure spring (39), the guide tube (14) and the first pressure spring (9) are arranged coaxially with respect to one another.

10. Compressed-air device for motor vehicles, having a compressed-air line to which a compressed-air accumulator can be connected for the purposes of providing a supply to consumer units, **characterized in that**, in at least one compressed-air line leading to the consumer units, there is arranged an overflow valve (1) which has the features of at least one of the preceding claims.

## Revendications

1. Soupape de trop-plein (1) destinée à des dispositifs à air comprimé, laquelle soupape comporte une entrée de pression (4) et une sortie de pression (6) destinées à l'air comprimé et comprend un piston de commutation (31) qui repose de manière étanche sur un siège de soupape (30) lorsque la soupape de trop-plein (1) est en position fermée et qui peut être soulevé du siège de soupape (30) à l'encontre d'une force de rappel réglable d'un ressort de compression (9) sous l'effet de la pression de l'air comprimé présent à l'entrée de pression (4) de la soupape de trop-plein (1), et dans laquelle un deuxième ressort de compression (39) est également présent qui agit sur le piston de commutation (31) avec une force de rappel prédéterminée lorsque la soupape de trop-plein (1) est en position fermée, **caractérisée en ce que** le deuxième ressort de compression (39) est situé dans une partie de boîtier supérieure (3) de la soupape de trop-plein (1) à peu près à hauteur du siège de soupape (30) et est en appui sur le piston de commutation (31), en étant axialement espacé du siège de soupape (30) et axialement proche d'une partie de boîtier inférieure (2) .

2. Soupape de trop-plein selon la revendication 1, **caractérisée en ce que** le deuxième ressort de compression (39) agit sur le piston de commutation (31) avec une force de rappel constante lorsque la soupape de trop-plein (1) est en position fermée.

3. Soupape de trop-plein selon la revendication 1 ou 2, **caractérisée en ce que** le premier ressort de compression (9) est utilisé pour effectuer un réglage fin de la force de rappel réglable agissant sur le piston de commutation (31), et **en ce que** la force de rappel du deuxième ressort de compression (39) agissant sur le piston de commutation (31) est supérieure à la force de rappel réglable du premier ressort de compression (9) et est utilisée pour régler le niveau de commutation général de la soupape de trop-plein (1).

4. Soupape de trop-plein selon l'une des revendications 1 à 3, **caractérisée en ce que** le premier ressort de compression (9) est logé dans un tube de guidage (14) disposé coaxialement au piston de commutation (31) et **en ce que** sa force de rappel est réglable au moyen d'une vis de réglage blocable (41).

5. Soupape de trop-plein selon la revendication 4, **caractérisée en ce que** le premier ressort de compression (9) est disposé de manière à être exposé à la pression atmosphérique.

6. Soupape de trop-plein selon l'une des revendications 1 à 5, **caractérisée en ce que** le deuxième ressort de compression (39) est disposé de manière à être exposé à la pression à la sortie de pression (6) de la soupape de trop-plein.

7. Soupape de trop-plein selon l'une des revendications 1 à 6, **caractérisée en ce que** le premier ressort de compression (9) vient en appui, avec une de ses extrémités, sur la vis de réglage (41) située dans le tube de guidage (14) et, avec son autre extrémité, sur un écrou de support cylindrique (21) vissé sur une saillie filetée axiale (37) située dans le prolongement axial du piston de commutation (31), l'écrou de support cylindrique (21) destiné au guidage supérieur du piston de commutation (31) étant disposé dans un alésage (38) ménagé dans le tube de guidage (14) en étant espacé axialement du siège de soupape (30) et entourant l'écrou de support cylindrique (21) avec un jeu de coulissement étroit, et une surface cylindrique (36) du piston de commutation (31) permettant, dans la région de l'autre extrémité axiale de celui-ci, d'effectuer un guidage inférieur de celui-ci dans une surface cylindrique géométriquement complémentaire d'un alésage (7) ménagé dans la partie de boîtier supérieure (3).

8. Soupape de trop-plein selon l'une des revendications 1 à 7, **caractérisée en ce qu'**une membrane (19) mobile axialement est disposée de manière étanche entre le piston de commutation (31) et le tube de guidage (14), la surface d'étanchéité active (F2) de la membrane étant de même dimension que la surface active (F1) du siège de soupape (30) de sorte que la pression dans un espace (43) menant à la sortie de pression (6) n'a aucun effet sur la position du piston de commutation (31).

9. Soupape de trop-plein selon l'une des revendications 1 à 8, **caractérisée en ce que** le tube d'entrée (24), le piston de commutation (31), le deuxième ressort de compression (39), le tube de guidage (14) et le premier ressort de compression (9) sont disposés coaxialement les uns aux autres.

10. Dispositif à air comprimé pour véhicules automobiles, ledit dispositif comprenant une conduite d'air comprimé à laquelle peut être raccordé un réservoir d'air comprimé pour alimenter des unités de consommation, **caractérisé en ce qu'**une soupape de trop-plein (1) est disposée dans au moins une conduite d'air comprimé menant aux unités de consommation et présentant les caractéristiques de l'une au moins des revendications précédentes.
